# EUROPEAN PATENT APPLICATION

(11) **EP 1 798 960 A1**
(43) Date of publication of application: **20.06.2007**
(21) Application number: 06025612.0
(22) Date of filing: 11.12.2006
(51) Int. Cl.: H04N 5/225

(54) **Imaging apparatus**

(30) Priority: 14.12.2005 JP 2005360492
(71) Applicant: SONY CORPORATION, Tokyo (JP)
(72) Inventor: Kajikawa, Katsuharu, Shinagawa-ku Tokyo (JP); Amatatsu, Seiya, Shinagawa-ku Tokyo (JP)
(74) Representative: Müller - Hoffmann & Partner

(57) **Abstract**

An imaging apparatus includes an imaging-block arranging section in which an imaging block having predetermined lenses and an imaging device is arranged and a media housing section that houses a recording medium for recording a photographed image. The imaging-block arranging section and the media housing sections are formed in an outer housing of the imaging apparatus. In the imaging apparatus, a partition wall that partitions the imaging-block arranging section and the media housing section is provided.

## Description

### CROSS-REFERENCES TO RELATED APPLICATIONS

The present invention contains subject matter related to Japanese Patent Application JP 2005-360492 filed in the Japanese Patent Office on December 14, 2005, the entire contents of which being incorporated herein by reference.

### BACKGROUND OF THE INVENTION

### 1. Field of the Invention

The present invention relates to a technical field for imaging apparatuses. More specifically, the invention relates to a technical field for realizing, for example, prevention of transmission of heat and transmission of sound between an imaging block and a recording medium by providing a partition wall that partitions an imaging-block arranging section in which the imaging block is arranged and a media housing section that houses the recording medium.

### 2. Description of the Related Art

There are imaging apparatuses that can perform moving image photographing and still image photographing such as a video camera and a still camera.

In the imaging apparatuses, a photographing lens for capturing an image of a subject, various lenses that show various functions such as a focus function and a zoom function, photographing buttons for performing various kinds of operation necessary at the time of photographing, a display screen for displaying an image at the time of photographing or at the time of reproduction of a photographed image, a microphone for inputting sound, and the like are provided.

In such imaging apparatuses, a recording medium for recording a photographed image is necessary (see, for example, JP-A-2001-6266).

### SUMMARY OF THE INVENTION

However, in the imaging apparatuses in the past, a recording medium and an imaging block having lenses and an imaging device are arranged in an identical space. Thus, for example, a deficiency in that vibration, heat, and sound generated at the time of driving (at the time of rotation) of the recording medium are transmitted to the imaging block could occur. In particular, when sound generated at the time of rotation of the recording medium is transmitted to the microphone, a deficiency in that the sound transmitted is inputted to the microphone as noise occurs. Conversely, it is also likely that, at the time of driving of the imaging block, vibration and heat generated in respective units of the imaging block are transmitted to the recording medium.

Thus, it is desirable to overcome the problems and realize, for example, prevention of transmission of heat and transmission of sound between the imaging block and the recording medium.

According to an embodiment of the invention, there is provided an imaging apparatus including an imaging-block arranging section in which an imaging block having predetermined lenses and an imaging device is arranged and a media housing section that houses a recording medium for recording a photographed image. The imaging-block arranging section and the media housing sections are formed in an outer housing of the imaging apparatus. In the imaging apparatus, a partition wall that partitions the imaging-block arranging section and the media housing section is provided.

Therefore, in the imaging apparatus according to this embodiment of the invention, the imaging block and the recording medium are arranged in separate spaces partitioned by the partition wall.

According to an embodiment of the invention, in an imaging apparatus, an imaging-block arranging section in which an imaging block having predetermined lenses and an imaging device is arranged and a media housing section that houses a recording medium for recording a photographed image are formed in an outer housing of the imaging apparatus. A partition wall that partitions the imaging-block arranging section and the media housing section is provided.

Therefore, vibration, heat and sound generated in the imaging block or the recording medium are less easily transmitted to the recording medium or the imaging block. This makes it possible to improve reliability of operations of the imaging block and the recording medium.

According to another embodiment of the invention, a control circuit board on which a driving circuit for driving the recording medium is formed is arranged in the imaging-block arranging section, a through hole is formed in the partition wall, a wiring board that connects the control circuit board and the recording medium via the through hole is provided, and a cover member that closes the through hole, through which the wiring board is inserted, is provided. Thus, a shielding property between the medium housing section and the imaging-block arranging section is high. This makes it possible to improve a rate of control of transmission of vibration, heat, and sound between both the sections.

According to still another embodiment of the invention, the wiring board is pressed against an opening edge of the through hole and held by the cover member. This makes it possible to prevent the wiring board from coming out of the control circuit board.

### BRIEF DESCRIPTION OF THE DRAWINGS

In the accompanying drawings:
Fig. 1 is a perspective view of an imaging apparatus according to an embodiment of the invention;
Fig. 2 is a perspective view of the imaging apparatus viewed from a direction different from that in Fig. 1;
Fig. 3 is a perspective view of the imaging apparatus with a display unit thereof opened;
Fig. 4 is a perspective view of the imaging apparatus with a part thereof disassembled;
Fig. 5 is an enlarged perspective view of the imaging apparatus with the display unit and an open/close cover thereof opened;
Fig. 6 is a perspective view of the imaging apparatus with a hard disk, an inner cover, and a housing cover thereof disassembled;
Fig. 7 is an enlarged perspective view of a part of a housing rib of a second panel shown in a cross section;
Fig. 8 is an enlarged rear view of the imaging apparatus with the display unit closed;
Fig. 9 is an enlarged rear view of the imaging apparatus with the display unit closed reversely to that in Fig. 8;
Fig. 10 is an enlarged longitudinal sectional view of a part of an internal structure of the imaging apparatus;
Fig. 11 is an enlarged transverse sectional view of a part of the internal structure;
Fig. 12 is a perspective view of the imaging apparatus with the second panel, an operation block, and a battery thereof removed;
Fig. 13 is a perspective view of the imaging apparatus gripped in a palm;
Fig. 14 is an enlarged disassembled perspective view of an attachment structure for a speaker;
Fig. 15 is an enlarged perspective view of the attachment structure for the speaker;
Fig. 16 is a perspective view of the imaging apparatus with a first panel and the battery thereof removed;
Fig. 17 is an enlarged disassembled perspective view of a board unit;
Fig. 18 is an enlarged perspective view of the board unit;
Fig. 19 is an enlarged perspective view of the board unit viewed from a direction different from that in Fig. 18;
Fig. 20 is a schematic enlarged plan view of a positional relation among a holding base, a circuit board, and a pressing member of the board unit;
Fig. 21 is an enlarged perspective view of a state in which the board unit is separated from a unit engaging section;
Fig. 22 is a schematic enlarged rear view of a state in which the board unit is engaged with the unit engaging section;
Fig. 23 is an enlarged disassembled perspective view of an imaging block, a heat-radiation sheet metal, and the like;
Fig. 24 is an enlarged perspective view of a state in which a control board and the like are attached to the imaging block; and

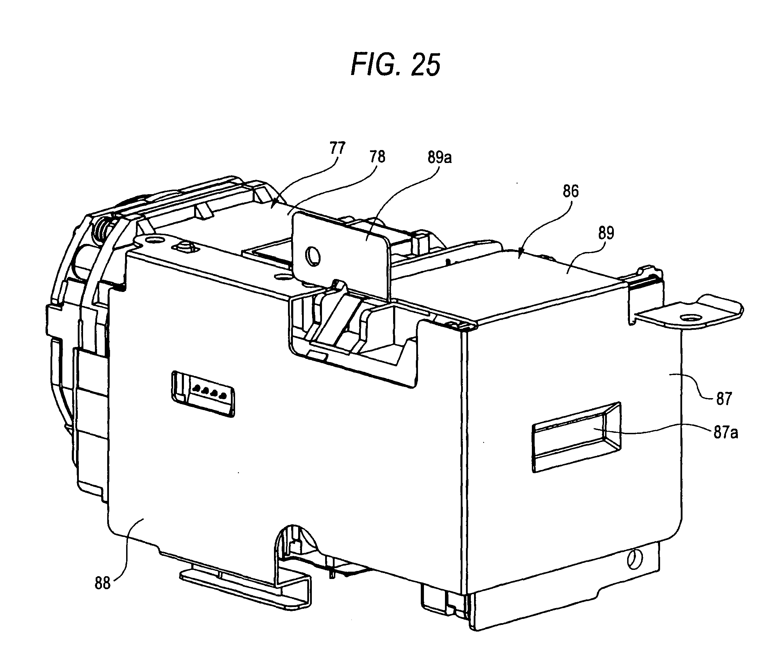

Fig. 25 is an enlarged perspective view of the imaging block, the heat-radiation sheet metal, and the like.

### DESCRIPTION OF THE PREFERRED EMBODIMENTS

An imaging apparatus according to the embodiments of the invention will be hereinafter explained with reference to the accompanying drawings.

In the following explanation, an imaging apparatus according to an embodiment of the invention is applied to a video camera that can perform still image photographing and moving image photographing.

It is possible to apply the invention to various imaging apparatuses having functions of moving image photographing or still image photographing such as a camera built in a cellular phone or a computer and a still camera.

In the following explanation, respective directions of front and rear, up and down, and right and left are indicated as directions viewed from a photographer side. A subject side is referred to as the front and the photographer side is referred to as the rear.

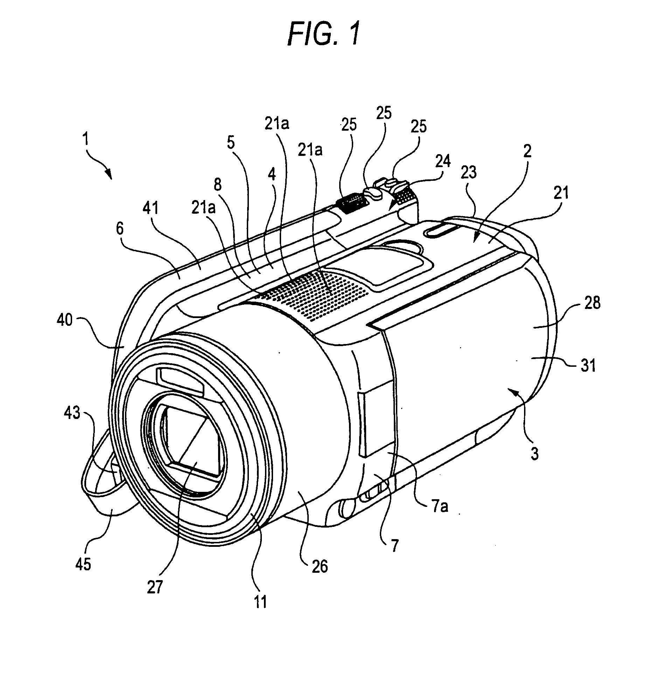

An imaging apparatus (a video camera) 1 includes a body unit 2 and a display unit 3 that is supported on the body unit 2 to freely move rotationally (freely open and close) and freely rotate (see Figs. 1 to 3).

The body unit 2 has an outer housing 4 and respective necessary units arranged in the outer housing 4. The outer housing 4 includes a camera housing 5 and a housing cover 6 slidable with respect to the camera housing 5.

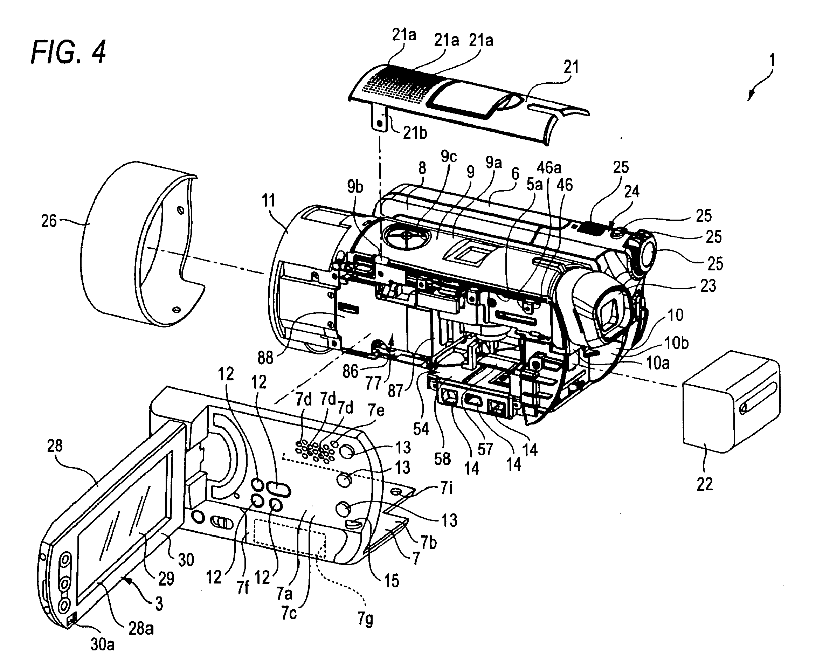

An internal space of the camera housing 5 is formed as an imaging-block arranging section 5a in which an imaging block having various lenses such as a zoom lens and a focus lens and an imaging device such as a CCD (Charge Coupled Device) described later is arranged (see Fig. 4).

A first panel 7, a second panel 8, a third panel 9, a fourth panel 10, and a cylindrical panel 11 are connected to each other to form the camera housing 5 (see Figs. 1 to 4). For example, the first panel 7 constitutes a left side section 7a and a lower surface section 7b. The second panel 8 constitutes a right side section 8a. The third panel 9 constitutes an upper surface section 9a. The fourth panel 10 constitutes a rear surface section 10a. The cylindrical panel 11 is combined with the front ends of the first panel 7, the second panel 8, and the third panel 9 in a state in which the panels are combined.

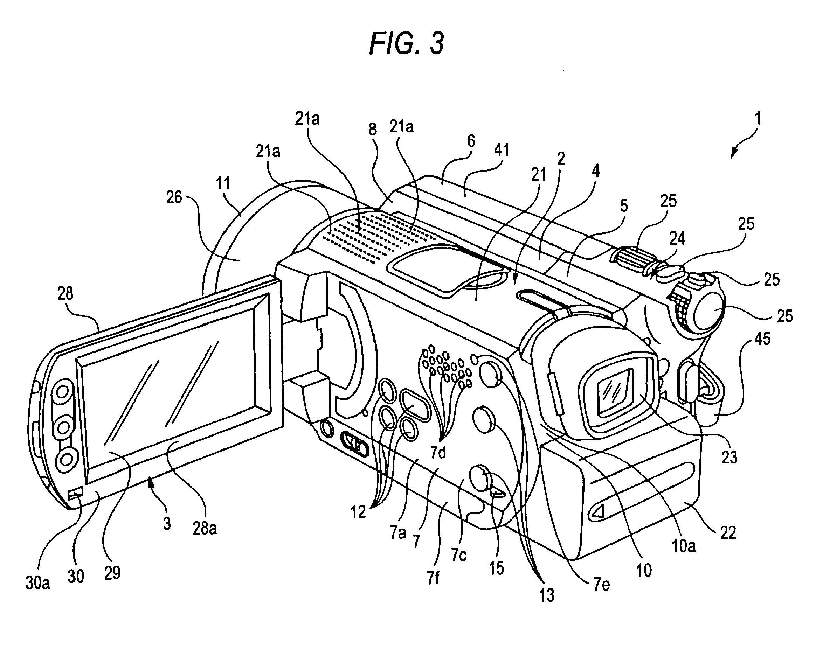

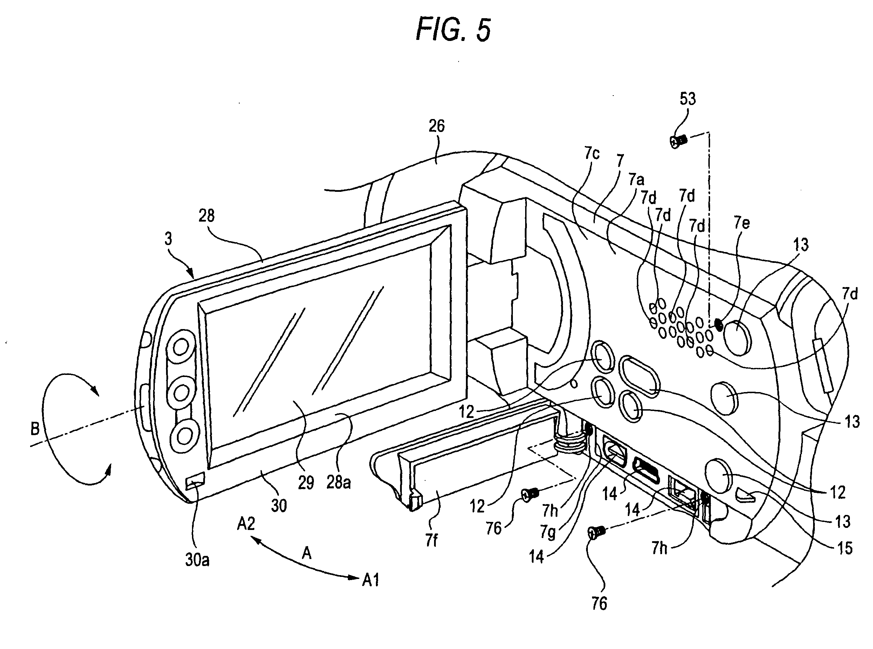

The left side section 7a of the first panel 7 is formed as a flat section 7c that is formed in a flat shape in parts excluding the front end and the lower end thereof. Plural operation buttons 12 are arranged in the flat section 7c (see Figs. 3 and 5). The operation buttons 12 function as, for example, a backlight correction button for performing backlight correction, a blur correction button for correcting a blur of an image, a red-eye prevention button for preventing so-called red-eye photographing in which eyes of a subject are photographed in red, and a white balance button for correcting a difference of hues. Speaker holes 7d are formed in the flat section 7c. A screw inserting hole 7e is formed near the speaker holes 7d in the flat section 7c. Rubber pads 13 are attached to be vertically spaced apart from one another on the outer surface at the rear end of the flat section 7c.

An open/close cover 7f is provided at the lower end of the left side section 7a of the first panel 7 (see Figs. 3 and 5). A rectangular arrangement hole 7g is formed in a position of the left side section 7a where the open/close cover 7f is provided (see Fig. 5). In the first panel 7, screw inserting holes 7h are formed in positions on the left and the right of the arrangement hole 7g, respectively. Connection terminals 14 are exposed by opening and closing the open/close cover 7f. The connection terminals 14 are, for example, a USB (Universal Serial Bus) 2.0 terminal, an HDMI (High Definition Multimedia Interface) terminal, and a terminal for power supply.

A positioning projection 15 is provided on the outer surface at the rear end at the lower end of the left side section 7a of the first panel 7. The positioning projection 15 is formed of a member different from that of the first panel 7. The positioning projection 15 has a function of being inserted in a positioning recess described later, which is formed in the display unit 3, to perform positioning of the display unit 3 with respect to the first panel 7. Since the first panel 7 is subjected to surface painting, the positioning projection 15, which is likely to come into contact with a wall surface in which the positioning recess is formed, is formed of a member different from that of first panel 7 not to apply the surface painting to the positioning projection 15. This makes it possible to prevent peeling-off of the paint.

A screw through hole 7i is formed at one end of the lower surface section 7b of the first panel 7 (see Fig. 4).

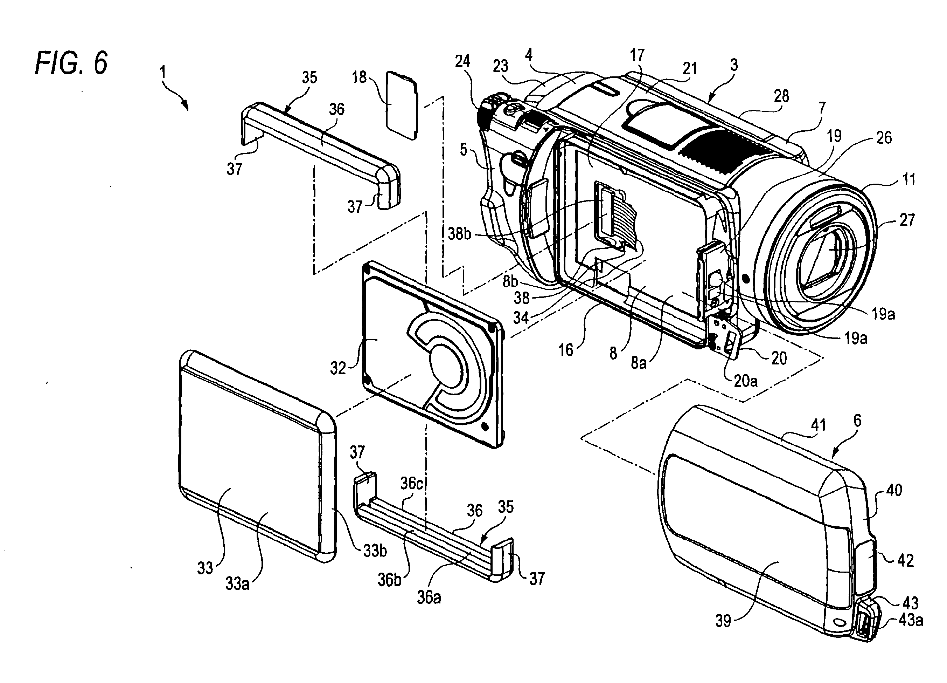

In the right side section 8a of the second panel 8, as shown in Fig. 6, a housing rib 16 formed in a frame shape projected rightward is provided and a media housing section 17 formed in a shallow concave shape opened rightward is formed by the housing rib 16. Therefore, the right side section 8a functions as a partition wall that partitions the media housing section 17 formed on the outer surface side of the camera housing 5 and the internal space of the camera housing 5, that is, the imaging-block arranging section 5a.

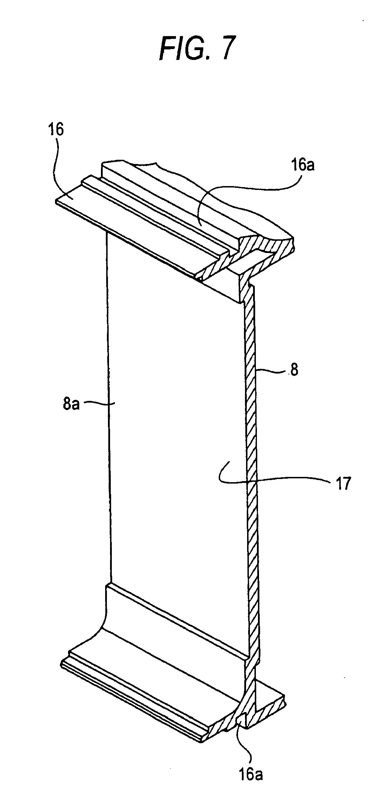

Slide grooves 16a extending in the front to rear direction are formed in sections located above and below the housing rib 16, respectively (see Fig. 7). A through hole 8b is formed in the right side section 8a. The through hole 8b is closed by a cover member 18 (see Fig. 6).

A board 19 facing the front to rear direction is attached to the front end of the right side section 8a of the second panel 8 (see Fig. 6). Light receiving/emitting units 19a, in which light showing a predetermined function is made incident and from which the light is emitted, are arranged on the board 19. As the light receiving/emitting units 19a, for example, a light receiving body in which light emitted from a remote controller at the time of automatic photographing is made incident and a light emitting body that emits an infrared ray photographable at night are used.

In the right side section 8a of the second panel 8, a holding sheet metal 20 is attached in a position right under the board 19. A holding hole 20a is formed in the holding sheet metal 20.

A cutout 9b is formed at the left side edge of the third panel 9 (see Fig. 4). A decorative panel 21 is attached to the upper surface of the third panel 9. The decorative panel 21 is formed of a material that has high thermal conductivity and is light, for example, aluminum.

The decorative panel 21 is formed in an oblong substantially rectangular shape. Sound holes 21a are formed at the front end thereof. A sound input hole 9c is formed in a section of the third panel 9 right under the sound holes 21a. A not-shown microphone is arranged in a position right under the sound input hole 9c. Therefore, sound at the time of photographing is inputted to the microphone via the sound holes 21a of the decorative panel 21 and the sound input hole 9c of the third panel 9.

An attached piece 21b projected downward is provided at the left side edge of the decorative panel 21. The attached piece 21b is projected from the cutout 9b of the third panel 9 to the inside of the camera hosing 5.

A battery mounting recess 10b is formed at the lower end of the fourth panel 10 (see Fig. 4).

A battery 22 is attached to the battery mounting recess 10b (see Fig. 3). A section above a section where the battery 22 is attached is projected backward. The projected section is provided as a viewfinder unit 23.

An operation block 24 is attached on the right of the viewfinder unit 23 (see Figs. 1 to 4) . Operation switches 25 are provided in the operation block 24. As the operation switches 25, for example, a mode changeover switch for changing over a photographing mode and a play mode, a power supply switch for turning on and off a power supply, a photographing switch for starting and stopping photographing, and a zoom switch for performing zooming are provided.

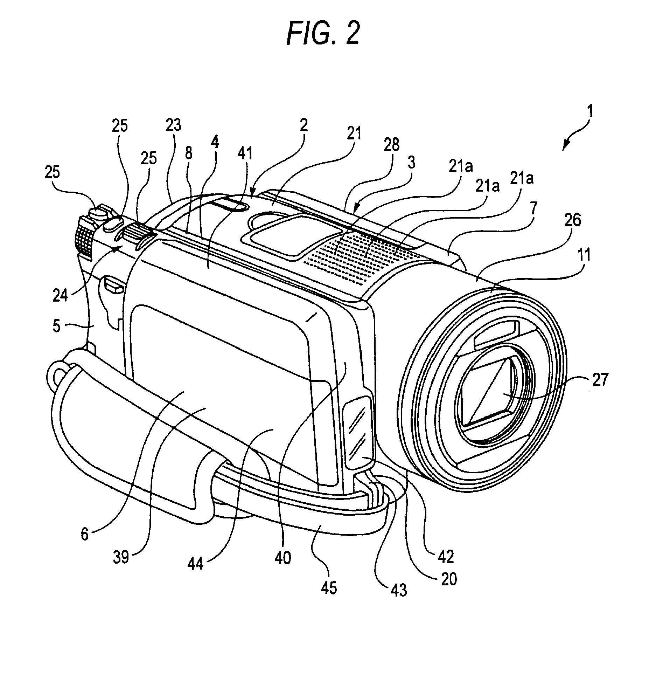

A decorative ring 26 is attached to the cylindrical panel 11 in an externally fitted shape. The decorative ring 26 is formed of a material that has high thermal conductivity and is light, for example, aluminum. In the inside of the cylindrical panel 11, a lens shutter 27 is arranged at the front end thereof (see Figs. 1 and 2).

The display unit 3 is supported on the body unit 2 to freely move rotationally (freely open and close) in an A direction shown in Fig. 5 and freely rotate in a B direction shown in Fig. 5.

As shown in Fig. 5, the display unit 3 has a display housing 28 and a display panel 29 held by the display housing 28. A first surface 30, which is a side of the display housing 28 on which the display panel 29 is provided, is formed in a flat shape. A second surface 31 (see Fig. 1) on the opposite side of the first surface 30 is formed in a gentle substantially arcuate surface shape. Therefore, the display housing 28 is formed thick in the center in the up-down direction and thin at both the upper and the lower ends. A positioning recess 30a is formed at the rear end at the lower end of the first surface 30 (see Figs. 4 and 5).

The surface (an image display surface) of the display panel 29 is in a position slightly recessed further to the second surface 31 side than the first surface 30. Therefore, a section of the display housing 28 where the display pane 29 is arranged is formed as an arrangement recess 28a.

The display unit 3 is made rotationally movable, for example, from 0° (a closed state) to 90° (an open state) with respect to the body unit 2. In the closed state, the display unit 3 is urged in a direction in which the display unit 3 comes into contact with the body unit 2 (an A1 direction shown in Fig. 5) by a not-shown urging spring. In the open state, the display unit 3 is urged in a direction separating from the body unit 2 (an A2 direction shown in Fig. 5) by the same not-shown urging spring.

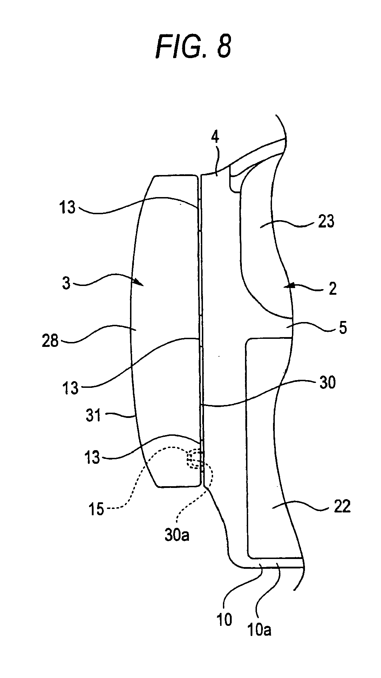

When the first surface 30 of the display unit 3 is in a closed state to be opposed to the left side section 7a, as shown in Fig. 8, the first surface 30 is in contact with the rubber pads 13 located on both the upper and the lower sides. The rubber pad 13 located in the center in the up-down direction is located in the arrangement recess 28a of the display housing 28. At this point, the positioning projection 15 provided in the left side section 7a is inserted into the positioning recess 30a formed in the first surface 30. Positioning of the display unit 3 with respect to the body unit 2 is performed.

Therefore, the positioning of the display unit 3 with respect to the body unit 2 is performed by the positioning recess 30a formed in the first surface 30 and the positioning projection 15 provided in the left side section 7a. Thus, it is unnecessary to provide positioning sections projecting leftward from both the upper and the lower ends of the left side section 7a in order to perform the positioning of the display unit 3 with respect to the body unit 2. This makes it possible to reduce the height of the imaging apparatus 1 and realize a reduction in size of the imaging apparatus 1.

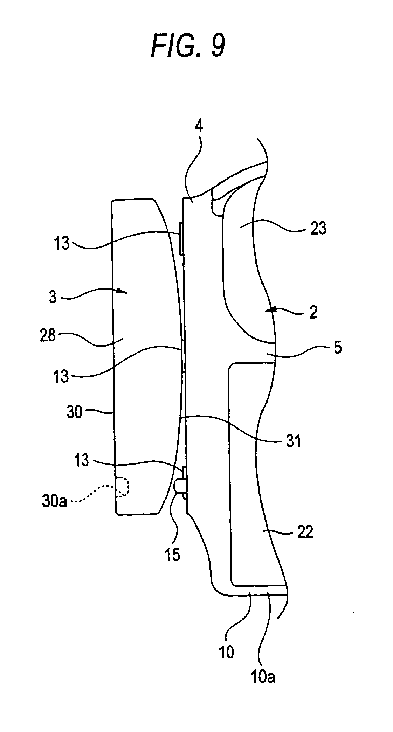

When the second surface 31 of the display unit 3 is in the closed state to be opposed to the left side section 7a, as shown in Fig. 9, the second surface 31 is in contact with the rubber pad 13 located in the center in the up-down direction. At this point, the second surface 31 formed in a substantially arcuate surface shape is located to be retracted from the positioning projection 15 provided in the left side section 7a.

Therefore, since the display unit 3 does not come into contact with the positioning projection 15, it is possible to prevent the second surface 31 from being scratched.

The second surface 31 only has to be formed in an arbitrary shape for preventing the second surface 31 from coming into contact with the positioning projection 15. Thus, it is possible to improve a degree of freedom of design of the imaging apparatus 1.

A predetermined recording media drive, for example, a hard disk 32 is arranged in the media housing section 17 formed in the right side section 8a of the camera housing 5. The hard disk 32 is stored in the media housing section 17 by the housing cover 6 in a state in which the hard disk 32 is sealed by an inner cover 33 (see Figs. 6, 10, and 11).

The hard disk 32 is formed in a flat oblong substantially rectangular shape. A flexible printed wiring board 34 is led out from one end in the longitudinal direction thereof.

Dampers 35 are attached to both the upper and the lower sides of the hard disk 32, respectively. The dampers 35 are formed of a material easily absorbing impact and vibration such as rubber and include fit-in sections 36 that extend in the front to rear direction and pressing sections 37 projected in the same direction orthogonal to the fit-in sections 36 from both the front and the rear ends of the fit-in sections 36, respectively. Fit-in grooves 36a extending in the front to rear direction are formed in the fit-in sections 36, respectively. Sections on the outer side of the fit-in grooves 36a are provided as outer-side holding sections 36b. Sections on the inner side of the fit-in grooves 36a are provided as inner-side holding sections 36c.

The dampers 35 are attached to the hard disk 32 by fitting both the upper and the lower ends of the hard disk 32 to the fit-in grooves 36a.

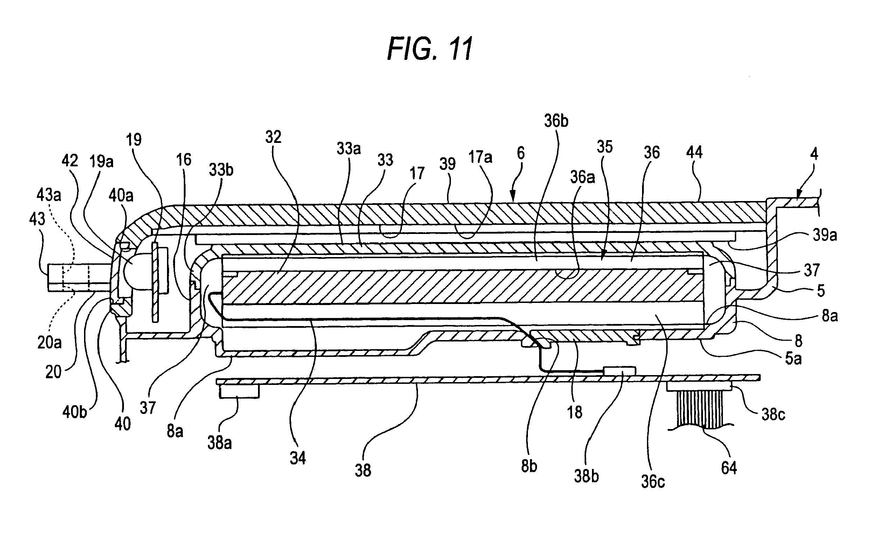

In a state in which the dampers 35 are attached to the hard disk 32, both the upper and the lower ends on the both the front and the rear sides of the hard disk 32 are pressed by the pressing sections 37 (see Fig. 11).

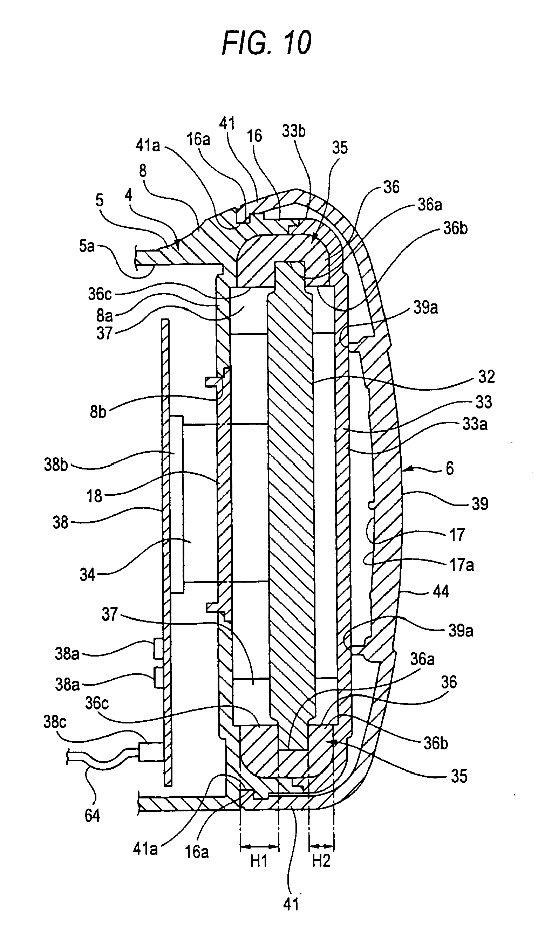

A control circuit board 38 is arranged right on the inner side of the right side section 8a forming the media housing section 17, that is, the imaging-block arranging section 5a, which is the internal space of the camera housing 5, to face the left to right direction (see Figs. 10 to 12). A driving circuit for driving the hard disk 32, an operation circuit for performing operation control on the respective units of the imaging block, and the like are formed in the control circuit board 38. Plural electronic components 38a and a connector 38b for connection with the hard disk 32 are mounted on the control circuit board 38. At the lower end of the control circuit board 38, a connector 38c for connection with the connection terminals 14 are mounted on a surface on the opposite side of a surface on which the connector 38b is mounted (see Figs. 10 and 11).

The hard disk 32 is arranged in the media housing section 17 in a state in which the dampers 35 are attached to the hard disk 32 (see Figs. 10 and 11). At this point, as shown in Figs. 6 and 11, the flexible printed wiring board 34 connected to the hard disk 32 is inserted through the through hole 8b, which is formed in the right side section 8a, and connected to the connector 38b of the control circuit board 38. When the flexible printed wiring board 34 is connected to the connector 38b, the through hole 8b is closed by the cover member 18 (see Figs. 10 and 11).

As shown in Fig. 11, the flexible printed wiring board 34 is housed in the media housing unit 17 in a state in which the flexible printed wiring board 34 is bent in a predetermined state. A section of the flexible printed wiring board 34 inserted through the through hole 8b is pressed against an opening edge of the through hole 8b and held by the cover member 18.

In this way, a part of the flexible printed wiring board 34 is pressed against the opening edge of the through hole 8b and held by the cover member 18. Thus, it is possible to prevent the flexible printed wiring board 34 from coming out of the connector 38b.

At the time of driving of the imaging block arranged in the imaging-block arranging section 5a, vibration and heat generation, in particular, heat generation in the CCD and the control circuit board 38 tends to occur. However, since the imaging-block arranging section 5a and the media housing section 17 are partitioned by the right side section 8a functioning as the partition wall, heat and vibration generated in the imaging block and the control circuit board 38 are less easily transmitted to the hard disk 32. Thus, it is possible to improve reliability of operations of the hard disk 32.

Conversely, when the hard disk 32 is driven, vibration and heat generation could occur in the hard disk 32. The right side section 8a functioning as the partition wall prevents the vibration and heat generation from being easily transmitted to the imaging block.

When the hard disk 32 is driven, sound due to the rotation of a hard disk may occur. This sound is cut off by the right side section 8a functioning as the partition wall. Thus, the sound generated is less easily transmitted to the microphone arranged in the imaging-block arranging section 5a as noise.

Moreover, since the through hole 8b formed in the right side section 8a functioning as the partition wall is closed by the cover member 18, a shielding property between the media housing section 17 and the imaging-block arranging section 5a is high. Thus, it is possible to improve a rate of control of transmission of vibration, heat, and sound between both the sections.

The inner cover 33 is formed in a shallow box shape opened leftward. As shown in Fig. 6, a flat section 33a formed in a rectangular shape and a peripheral edge 33b projected leftward from an outer peripheral edge of the flat section 33a are integrally formed to form the inner cover 33.

The housing cover 6 is formed in a shallow box shape opened leftward and backward. As shown in Figs. 6, 10, and 11, the housing cover 6 has a main surface section 39, a front surface section 40 projected leftward from the front edge of the main surface section 39, and side sections 41 projected leftward from both the upper and the lower side edges of the main surface section 39, respectively.

Ribs 39a extending in the front to rear direction are provided on the inner surface of the main surface section 39. The ribs 39a are located to be vertically spaced apart from each other.

A transmission hole 40a is formed in the front surface section 40. A stepped surface section 40b located slightly behind the surface of the front surface section 40 is provided at the front-side opening edge of the transmission hole 40a. A cover 42 capable of transmitting an infrared ray is attached to the stepped surface section 40b.

A holding projection 43 projected forward is provided at the lower end of the front surface section 40. A holding hole 43a is formed in the holding projection 43.

Slide projected strips 41a extending in the front to rear direction are provided on the inner surfaces at the left ends of the side sections 41, respectively.

In a state in which the hard disk 32 is arranged in the media housing section 17, the inner cover 33 is attached with the tip edge of the peripheral edge 33b bumped against the tip edge of the housing rib 16 and seals the hard disk 32. In a state in which the hard disk 32 is sealed by the inner cover 33, the housing cover 6 is slid backward to close the media housing section 17 and attached to the camera housing 5.

The slide of the housing cover 6 is performed by sliding the slide projected strips 41a to the slide grooves 16a of the housing ribs 16, respectively. When the housing cover 6 is slid and attached to the camera housing 5, the light receiving/emitting units 19a arranged on the board 19 are located right on the rear side of the cover 42 attached to the front surface section 40 and a part of the light receiving/emitting units 19a is located in the transmission hole 40a (see Fig. 11).

Conversely, it is possible to eject the hard disk 32 from the inside of the outer housing 4 by sliding the housing cover 6 forward and removing the inner cover 33.

It is possible to fix the housing cover 6 to the camera housing 5 by, for example, inserting an attaching screw through a not-shown screw through hole formed in the housing cover 6 and screwing the housing cover 6 to the camera housing 5.

As described above, in the imaging apparatus 1, the housing cover 6 is slid to be attached to the camera housing 5 and the hard disk 32 is housed in the media housing section 17. At the same time, the light receiving/emitting units 19a are closed by the housing cover 6. This makes it possible to improve workability in assembly work for the imaging apparatus 1.

It is possible to house the hard disk 32 in the media housing section 17 by sliding the housing cover 6 and attaching the housing cover 6 to the camera housing 5. This makes it possible to easily build the hard disk 32 in the outer housing 4.

Moreover, it is possible to replace and repair the hard disk 32 by removing the housing cover 6 and the inner cover 33. This makes it possible to improve maintainability.

It is generally known that the hard disk 32 is a device that is susceptible to an influence due to impact and, in handling the hard disk 32, special attention should be paid. However, as described above, if the housing cover 6 is attached to the camera housing 5 and the hard disk 32 is housed in the media housing section 17, it is possible to assemble the hard disk 32 in a final step after other assembly steps for the imaging apparatus 1 are completed. This makes it possible to prevent occurrence of a defect and a failure of the hard disk 32.

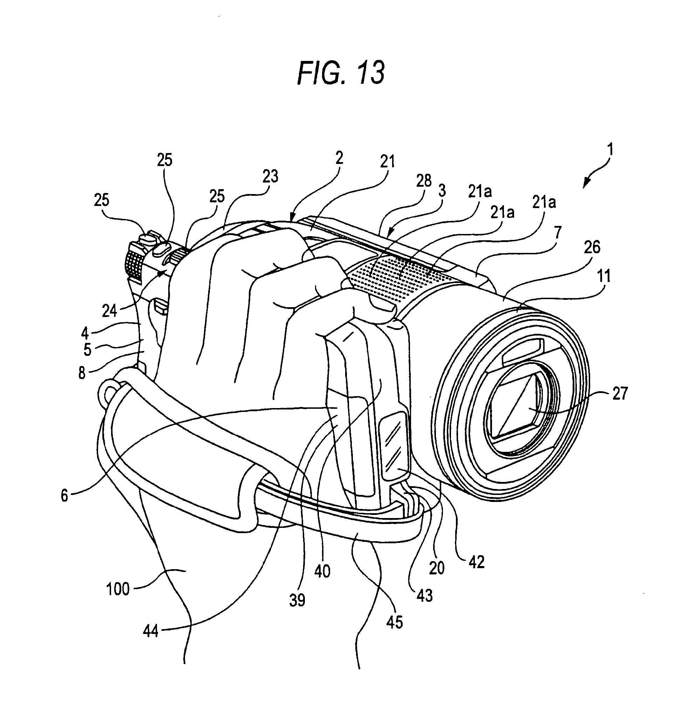

The outer surface of the housing cover 6 is formed as a grip section 44 held by a palm 100 of a user at the time of photographing (see Fig. 13).

In a state in which the housing cover 6 is slid backward and attached to the camera housing 5, the ribs 39a of the housing cover 6 are in contact with the flat section 33a of the inner cover 33 (see Figs. 10 and 11). Therefore, the inner cover 33 is pressed by the housing cover 6 and it is possible to prevent backlash of the hard disk 32 and the inner cover 33 in the media housing section 17.

In the example described above, the ribs 39a projecting to the outer surface side of the inner cover 33 are provided on the inner surface of the housing cover 6. Conversely, it is also possible to provide ribs projecting to the inner surface side of the housing cover 6 on the outer surface of the inner cover 33 and prevent backlash of the hard disk 32 and the inner cover 33 in the media housing section 17.

By providing the inner cover 33 as described above, when the user grips the grip section 44 and performs photographing, a distance from the hard disk 32 to the palm 100 of the user gripping the grip section 44 is long. Thus, it is possible to control of transmission of heat generated at the time of driving of the hard disk 32 to the palm 100. This makes it possible to improve convenience of use of the imaging apparatus 1.

By providing the inner cover 33, it is possible to freely design a shape of the housing cover 6 located on the outer side of the inner cover 33 as a shape easily gripped or the like. This makes it possible to improve a degree of freedom of design.

In a state in which the housing cover 6 is attached to the camera housing 5, a fixed gap (an air layer) 17a is formed between the inner surface of the housing cover 6 and the outer surface of the inner cover 33 by the ribs 39a (see Figs. 10 and 11). Therefore, vibration and heat generated in the imaging apparatus 1 are less easily transmitted to the palm 100 of the user gripping the grip section 44. This makes it possible to improve convenience of user of the imaging apparatus 1.

In the state in which the housing cover 6 is attached to the camera housing 5, the holding projection 43 of the housing cover 6 and the holding sheet metal 20 attached to the camera housing 5 are superimposed one on top of another (see Fig. 11). A strap 45 is inserted through the holding hole 43a of the holding projection 43 and the holding hole 20a of the holding sheet metal 20 (see Fig. 13). This allows the user to use the strap 45.

In the dampers 35 attached to the hard disk 32, as shown in Fig. 10, width H1 in the left to right direction of the inner-side holding sections 36c is set larger than width H2 in the left to right direction of the outer-side holding sections 36b. For example, the width H1 of the inner-side holding sections 36c is set to about 5 mm and the width H2 of the outer-side holding sections 36b is set to about 3 mm.

In the imaging apparatus 1, the respective units arranged in the imaging-block arranging section 5a of the camera housing 5 are in a fixed state. The hard disk 32 arranged in the media housing section 17 is held by the dampers 35 and is not in contact with the inner cover 33 and the second panel 8. The hard disk 32 is sealed by the inner cover 33. The housing cover 6 is located on the outer side of the inner cover 33 with the gap 17a provided between the covers.

Therefore, in the imaging apparatus 1, it is assumed that impact force transmitted to the hard disk 32 is larger when the imaging apparatus 1 is dropped with the display unit 3 side down than when the imaging apparatus 1 is dropped with the housing cover 6 side down.

Thus, taking into account a difference of the impact force assumed to be transmitted to the hard disk 32, the width H1 of the inner-side holding sections 36c of the dampers 35 is set larger than the width H2 of the outer-side holding sections 36b of the dampers 35.

By setting the width H1 and the width H2 of the inner-side holding sections 36c and the outer-side holding sections 36b different in this way, it is possible to control an impact force given to the hard disk 32 after optimizing width in the left to right direction of the dampers 35. This makes it possible to minimize width in the left to right direction of the imaging apparatus 1 and secure reliability of operations of the hard disk 32.

Sizes of the width H1 of the inner-side holding sections 36c and the width H2 of the outer-side holding sections 36b of the dampers 35 are not limited to the example described above. It is possible to set the width H1 and the width H2 to arbitrary values taking into account a magnitude of an impact force given to the hard disk 32 on the basis of a difference of a falling direction and weights of the respective units of the imaging apparatus 1. For example, taking into account an influence or the like of an impact force given to the hard disk 32 due to the weights of the respective units, when it is assumed that an impact force transmitted to the hard disk 32 is smaller when the imaging apparatus 1 is dropped with the display unit 3 side down than when the imaging apparatus 1 is dropped with the housing cover 6 side down, it is also possible to set the width H1 of the inner-side holding sections 36c smaller than the width H2 of the outer-side holding sections 36b.

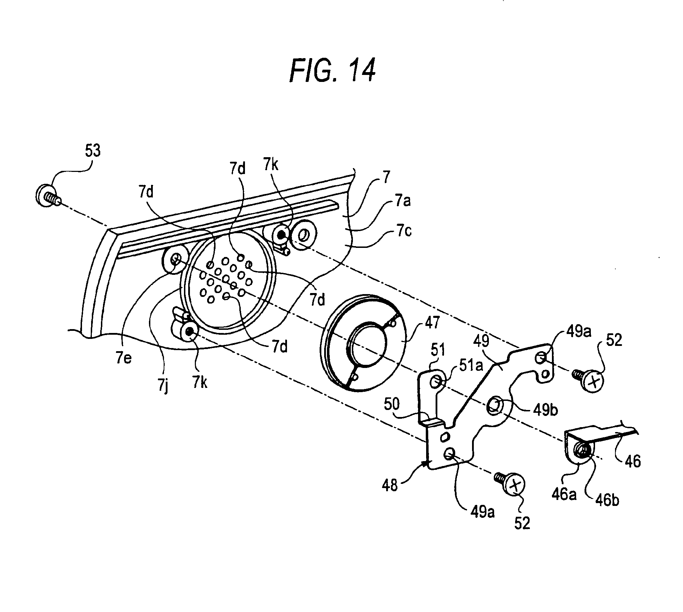

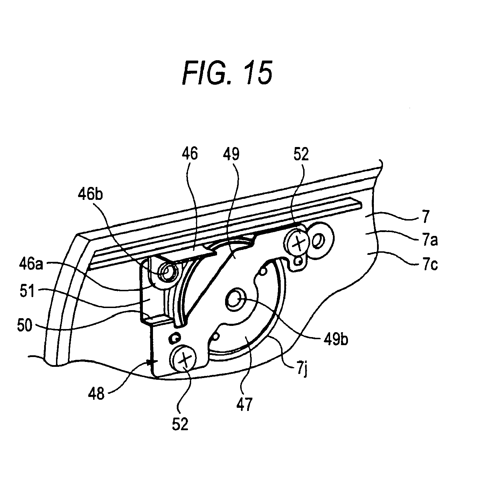

An arrangement rib 7j formed in an annular shape is provided on the inner surface of the left side section 7a of the first panel 7. The arrangement rib 7j is provided in a position surrounding the speaker holes 7d (see Figs. 14 and 15). On the inner surface of the left side section 7a, screwing bosses 7k are provided right on the outer side of the arrangement rib 7j.

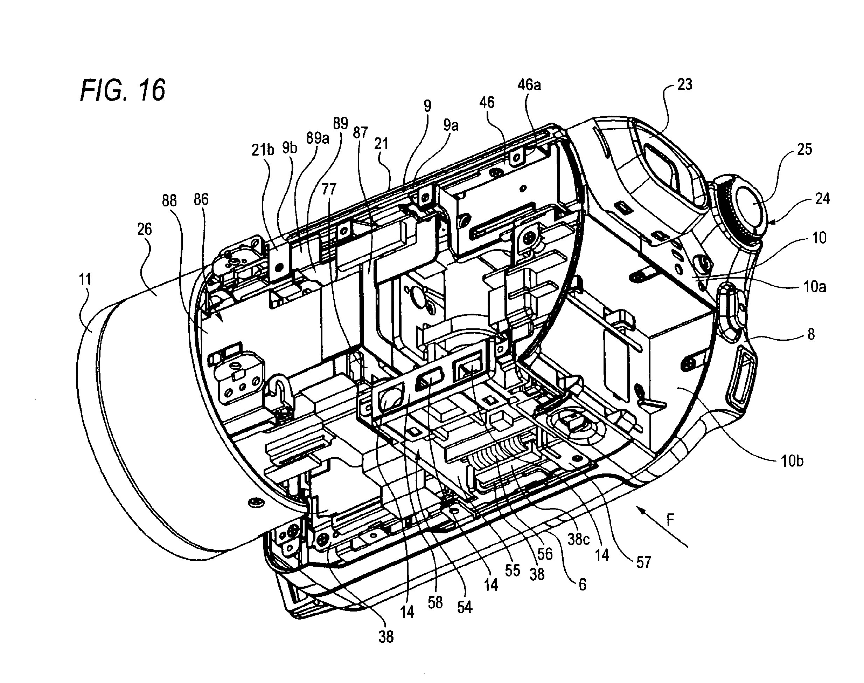

A grounding sheet metal 46 is fixed in the inside of the camera housing 5 (see Figs. 14 and 16). The grounding sheet metal 46 is connected to a not-shown grounded circuit provided in the inside of the camera housing 5. An attached piece 46a is provided in the grounding sheet metal 46. A screw hole 46b is formed in the attached piece 46a.

A speaker 47 formed in a substantial disc shape is arranged on the inner side of the arrangement rib 7j of the first panel 7.

The speaker 47 is attached to the first panel 7 in a state in which the speaker 47 is pressed by a pressing sheet metal 48 (see Figs. 14 and 15) . The pressing sheet metal 48 is formed of a conductive material having a spring property, for example, SUS (stainless steel). The pressing sheet metal 48 includes a pressing section 49 extending in an oblique direction, a continuous section 50 projected leftward from one end in the longitudinal direction of the pressing section 49, and an attached section 51 projected upward from the left end of the continuous section 50. Screw through holes 49a are formed at both the ends in the longitudinal direction of the pressing section 49, respectively. A spring pressing section 49b of an embossed shape projected leftward is provided in the center in the longitudinal direction of the pressing section 49. A screw hole 51a is formed at the tip of the attached section 51.

The pressing sheet metal 48 is attached to the inner surface of the left side section 7a of the first panel 7 by inserting first attaching screws 52 through the screw through holes 49a and screwed in the screwing bosses 7k of the first panel 7, respectively. In a state in which the pressing sheet metal 48 is attached to the left side section 7a, the spring pressing section 49b is elastically in contact with the center on the rear surface of the speaker 47 to hold the speaker 47.

In a state in which the pressing sheet metal 48 is attached to the left side section 7a, a second attaching screw 53 is inserted into the screw inserting hole 7e from the outer surface side of the left side section 7a. The second attaching screw 53 is inserted through the screw hole 51a of the pressing sheet metal 48 and screwed in the screw hole 46b of the grounding sheet metal 46. Therefore, the attached section 51 of the pressing sheet metal 48 and the attached piece 46a of the grounding sheet metal 46 are brought into surface contact with each other by the second attaching screw 53.

Therefore, when the speaker 47 is charged with static electricity, this static electricity promptly flows from the speaker 47 to the grounded circuit via the pressing sheet metal 48 and the grounding sheet metal 46 and is discharged from the grounded circuit.

As described above, in the imaging apparatus 1, the pressing sheet metal 48 having the spring pressing section 49b is used to press of the speaker 47 and prevent charging of the speaker 47. Thus, a cushion such as a rubber bush is unnecessary between the pressing sheet metal 48 and the speaker 47. This makes it possible to reduce the number of components.

Since the spring pressing section 49b is formed by forming a part of the pressing sheet metal 48 as a projection of an embossed shape, it is easy to machine the pressing sheet metal 48. This makes it possible to reduce manufacturing cost.

Moreover, the pressing sheet metal 48 and the grounding sheet metal 46 are connected by the second attaching screw 53 and the second panel 7 is attached to the grounding sheet metal 46 fixed in the inside of the camera housing 5. Thus, it is possible to simultaneously perform connection of the pressing sheet metal 48 and the grounding sheet metal 46 and assembly of the second panel 7. This makes it possible to improve workability in assembly work for the imaging apparatus 1.

A board unit 54 is attached in the inside of the camera housing 5 (see Fig. 16).

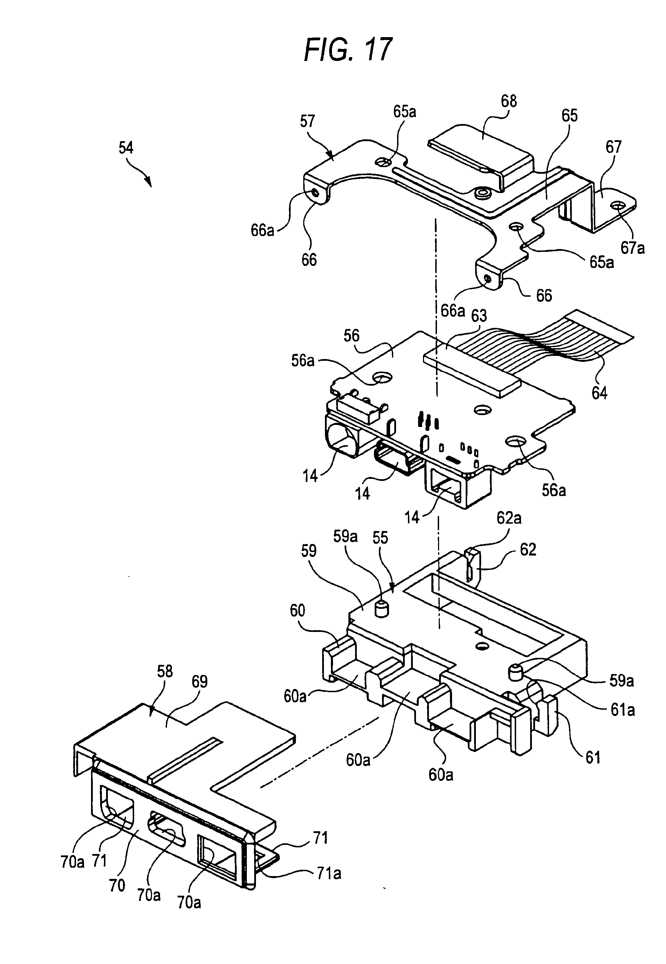

As shown in Figs. 17 to 19, the board unit 54 has a holding base 55, a circuit board 56 held by the holding base 55, a pressing member 57 that presses the circuit board 56 from the opposite side of the holding base 55, and a holding frame 58 that holds the circuit board 56 and the pressing member 57.

As shown in Fig. 17, the holding base 55 has a base section 59, a terminal arrangement section 60 projected leftward from the base section 59, a first engaging section 61 projected from the rear surface of the base section 59, and a second engaging section 62 projected from the right side of the base section 59.

Insertion pins 59a projected upward is provided to be spaced apart from each other in the front to rear direction in the base section 59.

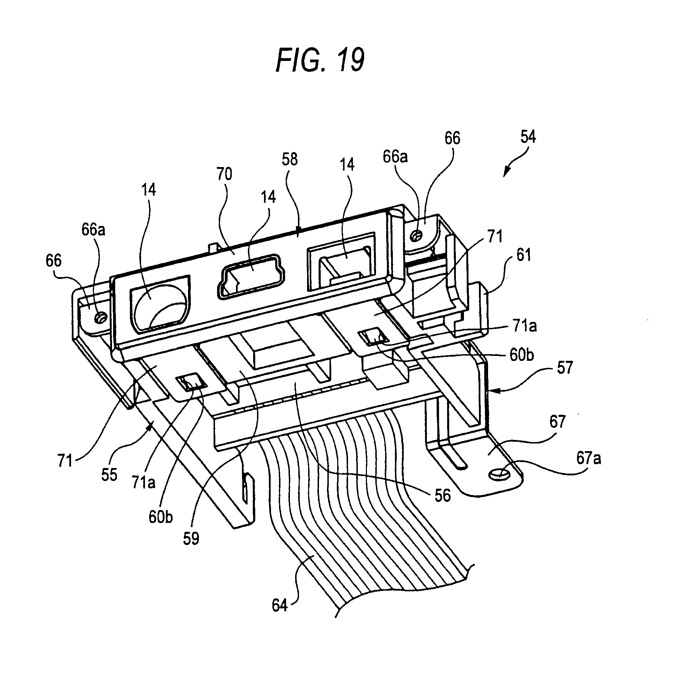

Arrangement recesses 60a are formed to be adjacent to one another in the front to rear direction in the terminal arrangement section 60. The arrangement recesses 60a are opened upward and leftward. Locking pawls 60b are provided to be spaced apart from each other in the front to rear direction on the lower surface of the terminal arrangement section 60 (see Fig. 19).

As shown in Fig. 17, the first engaging section 61 is projected from a position close to the left end on the rear surface of the base section 59 and formed in a substantial L shape. An engaging pawl 61a projected forward is provided at the tip of the first engaging section 61.

The second engaging section 62 is projected from the front end on the right side of the base section 59 and formed in a substantial L shape. An engaging pawl 62a projected leftward is provided at the tip of the second engaging section 62.

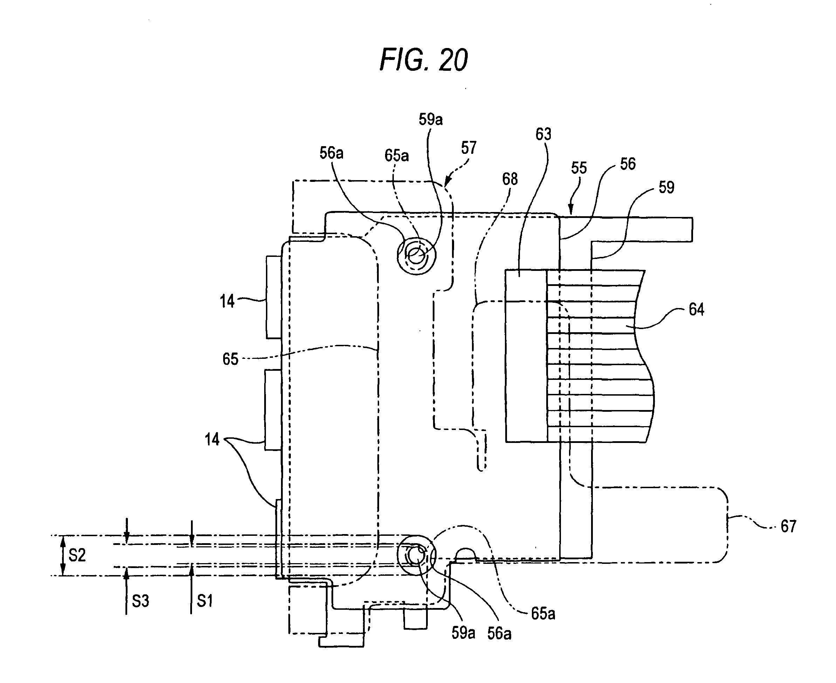

Pin through holes 56a are formed to be spaced apart from each other in the front to rear direction in the circuit board 56. A diameter (S2 shown in Fig. 20) of the pin through holes 56a is set larger than a diameter (S1 shown in Fig. 20) of the insertion pins 59a of the base section 59. A connector 63 is mounted on the circuit board 56. One end of a flexible printed wiring board 64 functioning as connecting means is connected to the connector 63. The flexible printed wiring board 64 is projected rightward from the circuit board 56. The connection terminals 14 are mounted to be arranged in the front to rear direction at the left end on the lower surface of the circuit board 56. The connection terminals 14 are connected to the flexible printed wiring board 64 via a circuit formed on the circuit board 56.

The pressing member 57 has a pressing surface section 65 facing the up-down direction, fixed sections 66 projected downward from both the front and rear ends at the left edge of the pressing surface section 65, respectively, a fixing section 67 projected downward from the right edge of the pressing surface section 65 and further projected rightward, and a lift preventing section 68 located slightly above the pressing surface section 65. Pin inserting holes 65a are formed to be spaced apart from each other in the front to rear direction in the pressing surface section 65. Screw holds 66a are formed in the fixed sections 66, respectively. An inserting hole 67a is formed at the tip of the fixing section 67. A diameter (S3 shown in Fig. 20) of the pin inserting holes 65a is set smaller than the diameter S2 of the pin inserting holes 56a of the circuit board 56.

The holding frame 58 has a holding surface section 69 facing the up-down direction, a terminal inserting section 70 projected downward from the left edge of the holding surface section 69, and locking sections 71 projected rightward from the lower edge of the terminal inserting section 70.

Terminal inserting holes 70a are formed to be arranged in the front to rear direction in the terminal inserting section 70. The terminal inserting holes70a are formed in a shape corresponding to an external shape of the connection terminals 14, respectively.

The locking sections 71 are projected rightward from both the front and the rear ends at the lower end of the terminal inserting section 70, respectively (see Fig. 19). Locking holes 71a are formed in the locking sections 71, respectively.

The board unit 54 is assembled as described below.

First, the circuit board 56 is placed on the base section 59 of the holding base 55 and the insertion pins 59a are inserted into the pin through holes 56a, respectively. The connection terminals 14 are arranged in terminal arranging sections 60 of the holding base 55, respectively. The connection terminals 14 arranged in the terminal arranging sections 60 are arranged in a state in which a fixed gap is formed between the connection terminals 14 and the respective surfaces forming the terminal arranging sections 60, respectively.

The pressing member 57 is placed on the circuit board 56 and the insertion pins 59a are inserted into the pin inserting holes 65a.

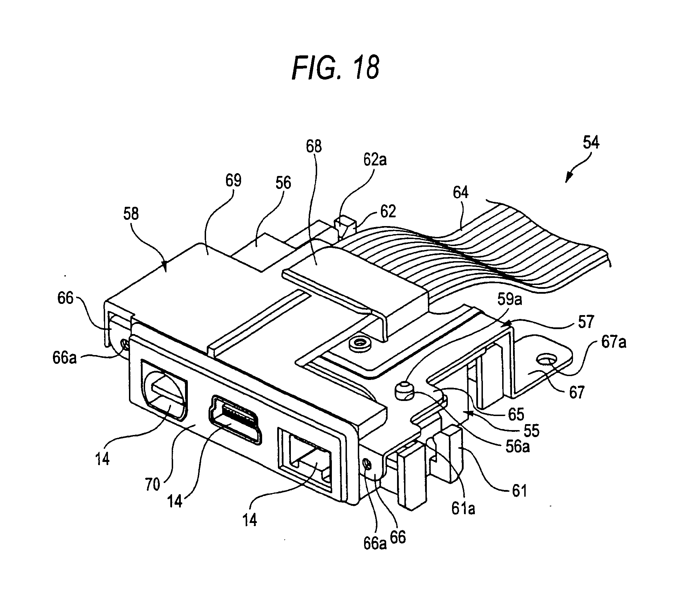

Subsequently, the holding frame 58 is slid rightward with respect to the holding base 55, the circuit board 56 and the pressing member 57. When the holding frame 58 is slid rightward, as shown in Fig. 19, the locking pawls 60b of the holding base 55 are locked by the opening edges of the locking holes 71a of the locking sections 71, respectively, and the holding frame 58 and the holding base 55 are connected. The tips of the connection terminals 14 are arranged respectively in association with the terminal inserting holes 70a of the holding frame 58. A part of the holding surface section 69 of the holding frame 58 is located below the lift preventing section 68 of the pressing member 57 (see Fig. 18). Since the part of the holding surface section 69 is located below the lift preventing section 68, the lift of the holding frame 58 is prevented.

In the board unit 54 assembled in this way, the circuit board 56 is pressed by the base section 59 of the holding base 55 and the pressing surface section 65 of the pressing member 57. However, as described above, since the diameter S2 of the pin through holes 56a of the circuit board 56 is set larger than the diameter S1 of the insertion pins 59a of the holding base 55, the circuit board 56 is made movable with respect to the holding base 55 and the pressing member 57 in a range of a dimension difference (S2-S1) between the pin through holes 56a and the insertion pins 59a.

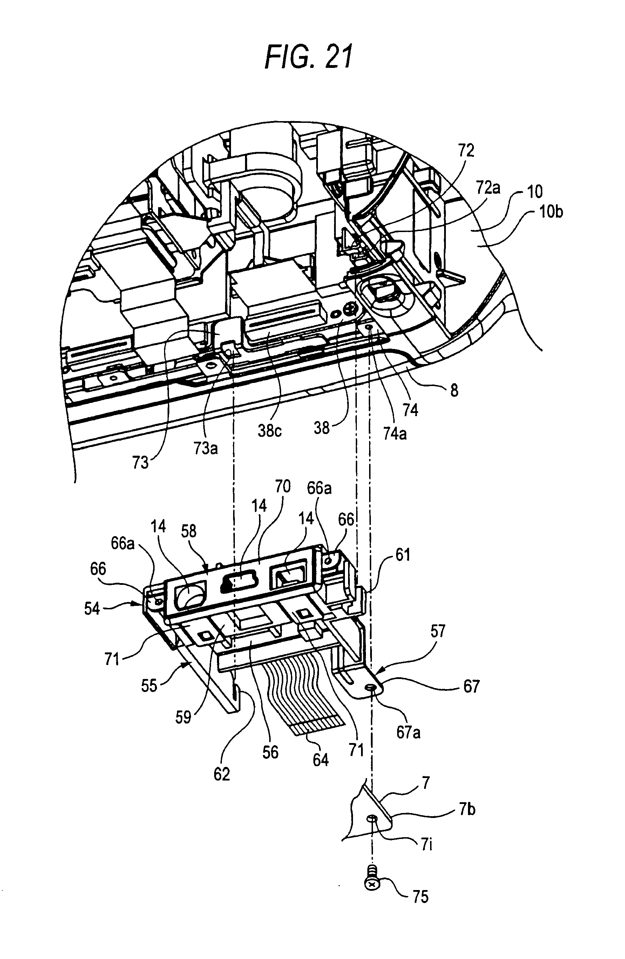

Two unit engaging sections 72 and 73 and a unit fixing section 74 are provided at the lower end in the inside of the camera housing 5 (see Fig. 21). Engaging holes 72a and 73a are formed in the unit engaging sections 72 and 73, respectively. A screw hole 74a is formed in the unit fixing section 74.

In the board unit 54, the leading end of the flexible printed wiring board 64 is connected to the connector 38c of the control circuit board 38. The first engaging section 61 and the second engaging section 62 of the holding base 55 are inserted into the engaging holes 72a and 73a of the unit engaging sections 72 and 73, respectively. When the first engaging section 61 and the second engaging section 62 are inserted into the engaging holes 72a and 73a, respectively, the respective engaging pawls 61a and 62a are engaged with the unit engaging sections 72 and 73 and the board unit 54 is held in the inside of the camera housing 5 (see Fig. 16). At this point, the tip of the fixing section 67 is superimposed on the unit fixing section 74.

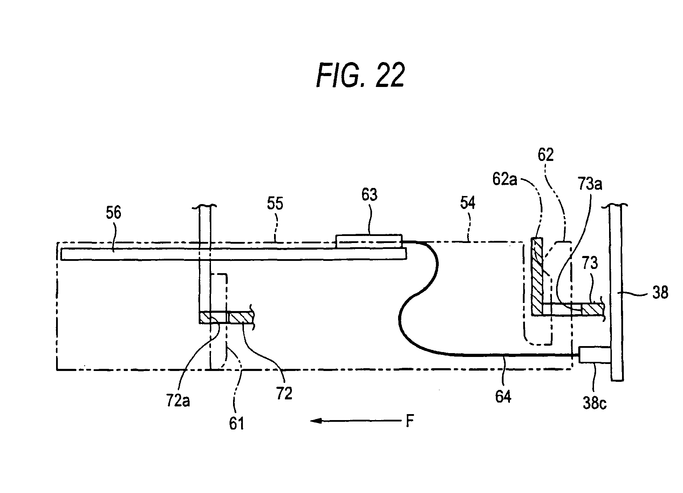

In a state in which the board unit 54 is held in the inside of the camera housing 5, as shown in Fig. 22, the flexible printed wiring board 64 is bent in a predetermined state. A moving force caused by the flexible printed wiring board 64 returning to an original state before being bent acts in the left direction (an arrow F direction shown in Fig. 16 and 22) . This moving force of the flexible printed wiring board 64 is given to the board unit 54 as an urging force to the left. A pressure of contact of the first engaging section 61 and the second engaging section 62 with the unit engaging sections 72 and 73 increases.

Therefore, it is possible to prevent the board unit 54 from falling out of the unit engaging sections 72 and 73 without separately providing fall preventing means.

As described above, in the imaging apparatus 1, it is possible to hold the board unit 54 in the camera housing 5 before being fixed. Thus, only a small work space is necessary in connecting the flexible printed wiring board 64 to the connector 38c compared with the case in which the board unit 54 is attached to the first panel 7 and held in advance and the flexible printed wiring board 64 is connected to the connector 38c in work for connecting the first panel 7 and the second panel 8 and the like. This makes it possible to improve workability.

Since only a small work space is necessary in connecting the flexible printed wiring board 64 to the connector 38c, it is possible to reduce the length of the flexible printed wiring board 64. This makes it possible to increase speed of communication and prevent occurrence of electromagnetic noise.

In particular, when terminals of USB 2.0 or a higher standard or HDMI terminals are used as the connection terminals 14, it is necessary to set length of the terminals to be equal to or smaller than a fixed length under the standard because of a relation between the length and communication speed and the like. This makes it possible to secure a proper state of use of these terminals.

In the state in which the board unit 54 is held as described above, the first panel 7 is assembled with the second panel 8, the third panel 9, the fourth panel 10, and the cylindrical panel 11. At this point, as shown in Fig. 21, an attaching screw 75 is inserted through a screw through hole 7i formed in the first panel 7 and an insertion hole 67a formed in the fixing section 67 of the board unit 54 and screwed in the screw hole 74a formed in the unit fixing section 74.

When the first panel 7 is assembled with the second panel 8 and the like, as shown in Fig. 5, the tip of the terminal arrangement section 60 of the board unit 54 is fit in the arrangement hole 7g formed in the first panel 7. In this state, screw members 76 are inserted through the screw inserting holes 7h and screwed in the screw holes 66a formed in the pressing member 57, respectively.

In this way, the attaching screw 75 is inserted through the insertion hole 67a of the fixing section 67 and screwed in the screw hole 74a of the unit fixing section 74 and the screw members 76 are screwed in the screw holes 66a of the pressing member 57, respectively. Consequently, the board unit 54 is fixed to the first panel 7.

In the imaging apparatus 1, as described above, the board unit 54 is fixed to the first panel 7 when the first panel 7 is connected to the second panel 8 and the like. Thus, the assembly work for the imaging apparatus 1 is simplified. This makes it possible to improve workability in the assembly work for the imaging apparatus 1.

As described above, the circuit board 56 is made movable with respect to the holding base 55 and the pressing member 57 in the range of the dimension difference between the pin through holes 56a and the insertion pins 59a. Therefore, in connecting predetermined connection cables to the connection terminals 14, when loads are given from the connection cables to the connection terminals 14, the circuit board 56 is moved with respect to the holding base 55 and the pressing member 57. Thus, solder in the connecting sections of the connection terminals 14 and the circuit board 56 less easily peels. This makes it possible to prevent the connection terminals 14 from coming out of the circuit board 56.

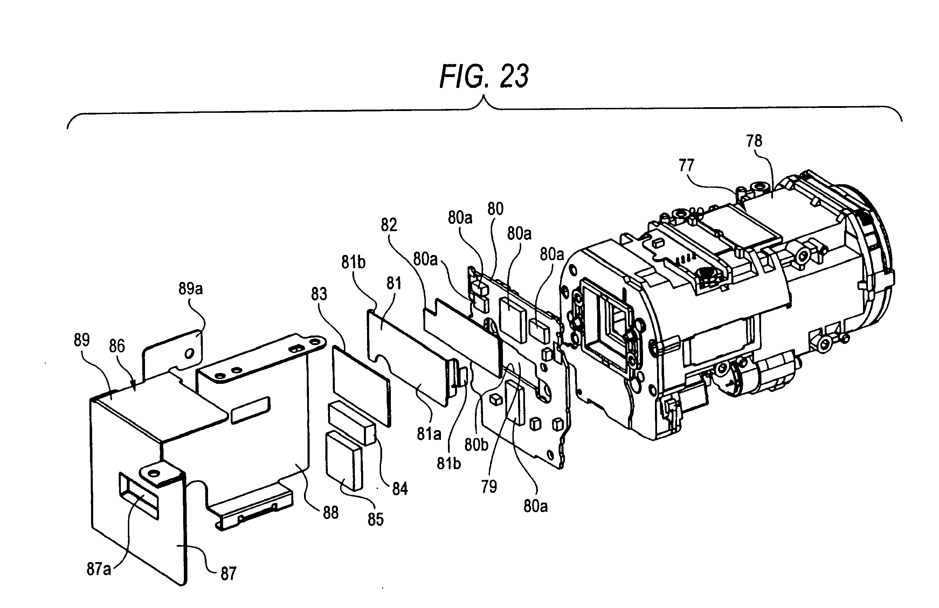

An imaging block 77 is arranged in the imaging-block arranging section 5a of the camera housing 5 (see Fig. 16). The imaging block 77 has a lens barrel 78, predetermined lenses such as a zoom lens and a focus lens arranged in the lens barrel 78, and an imaging device 79, for example, a CCD arranged on the rear surface of the lens barrel 78 (see Fig. 23).

A control board 80 is arranged right on the rear side of the imaging block 77. The control board 80 has a driving circuit for the imaging device 79 and has predetermined chip components 80a such as a timing generator on the rear surface thereof. A hole 80b is formed in the center of the control circuit board 80. The imaging device 79 is attached to the front surface of the control circuit board 80 to cover the hole 80b.

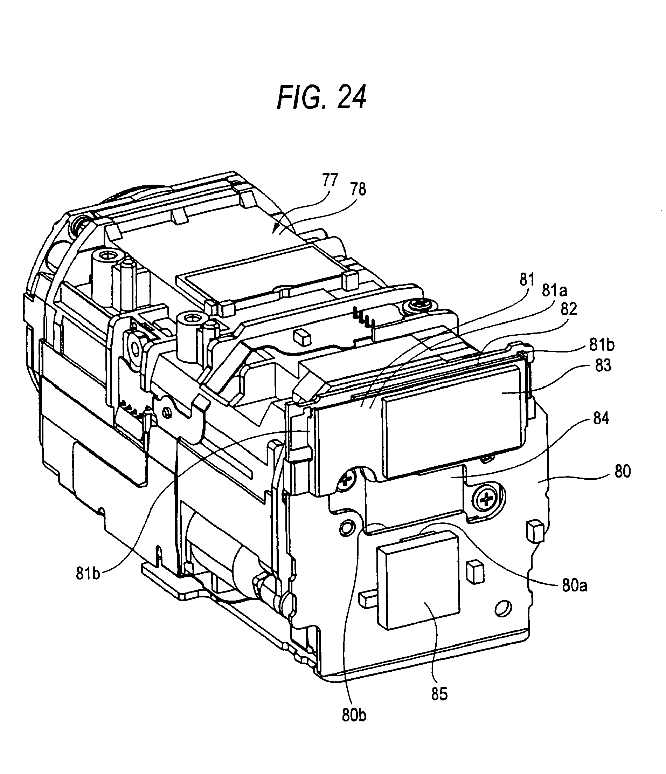

A shield case 81 is attached to the rear surface of the control board 80 (see Figs. 23 and 24). The shield case 81 has a shield surface section 81a formed in an oblong substantially rectangular shape and attached piece sections 81b projected forward from both the left and the right edges of the shield surface section 81a. The attached piece sections 81b of the shield case 81 are attached to the control board 80. The attached piece sections 81b are attached to the control board 80 by, for example, soldering. The soldered sections are connected to a grounding pattern formed in the control board 80.

The shield case 81 shields the chip components 80a mounted on the upper side of the control board 80, for example, the timing generator. Therefore, electromagnetic noise radiated from the chip components 80a such as the timing generator is shielded by the shield case 81 to prevent unnecessary radiation.

Heat transfer sheets 82 and 83 are stuck to both the front and the rear surfaces of the shield surface section 81a of the shield case 81, respectively. The heat transfer sheet 82 on the front side is set in surface contact with the chip components 80a mounted on the upper side of the control board 80.

A heat transfer cushion 84 is arranged in the hole 80b of the control board 80. The heat transfer cushion 84 is set in surface contact with the imaging device 79.

A heat transfer cushion 85 is arranged on the chip components 80a mounted on the lower side of the control board 80.

A heat-radiation sheet metal 86 is arranged in the imaging-block arranging section 5a of the camera housing 5 to cover a part of the imaging block 77. The heat-radiation sheet metal 86 has a rear surface section 87, a side section 88 projected forward from the left edge of the rear surface section 87, and an upper surface section 89 projected forward from the upper edge of the rear surface section 87.

A contact projection 87a of an embossed shape projected forward is provided in the center of the rear surface section 87.

A connecting section 89a bent at the right angle is provided at the front end of the upper surface section 89. The connecting section 89a is located to face the left to right direction.

In a state in which the heat-radiation sheet metal 86 is arranged in the imaging-block arranging section 5a, the contact projection 87a of the rear surface section 87 is set in surface contact with the heat transfer cushion 84 and sections on both the upper and the lower sides of the contact projection 87a of the rear surface section 87 are set in surface contact with the heat transfer sheet 83 and the heat transfer cushion 85, respectively. The connecting section 89a of the upper surface section 89 is connected to the attached piece 21b of the decorative panel 21 by, for example, screwing.

When the imaging block 77 is driven, the imaging device 79 and the chip components 80a mounted on the control board 80 generate heat. The heat generated in the imaging device 79 is transmitted from the heat transfer cushion 84 to the connecting section 89a of the upper surface section 89 through the rear surface section 87 of the heat-radiation sheet metal 86, transmitted from the connecting section 89a to the decorative panel 21, and discharged to the atmosphere. The heat generated in the chip components 80a is transmitted from the heat transfer sheet 82, the shield case 81, the heat transfer sheet 83, or the heat transfer cushion 85 to the connecting section 89a of the upper surface section 89 through the rear surface section 87 of the heat-radiation sheet metal 86, transmitted from the connecting section 89a to the decorative panel 21, and discharged to the atmosphere.

In this way, in the imaging apparatus 1, the heat generated in the imaging device 79 and the chip components 80a is transmitted from the heat-radiation sheet metal 86 located in a lower position to the decorative panel 21 located in an upper position and discharged in a usual photographing state. This makes it possible to improve heat radiation efficiency.

The heat generated in the chip components 80a is transmitted to the heat-radiation sheet metal 86 via the shield case 81 and discharged. Thus, the shield case 81 functions as means for shielding electromagnetic noise and means for transmitting heat. This makes it possible to shield electromagnetic noise and discharge heat with a simple structure without causing an increase in the number of components. The heat generated in the imaging device 79 and the chip components 80a is discharged from the decorative panel 21. However, since the plural sound holes 21a for inputting sound to the microphone are formed in the decorative panel 21, the heat generated in the imaging device 79 and the chip components 80a is also discharged from the surface in which the sound holes 21a are formed. Since the sound holes 21a are formed, a heat radiation area of the decorative panel 21 is set large. This makes it possible to improve the heat radiation efficiency.

Since the decorative panel 21 is formed of aluminum, it is possible to reduce the weight of the imaging apparatus 1 and improve the heat radiation efficiency.

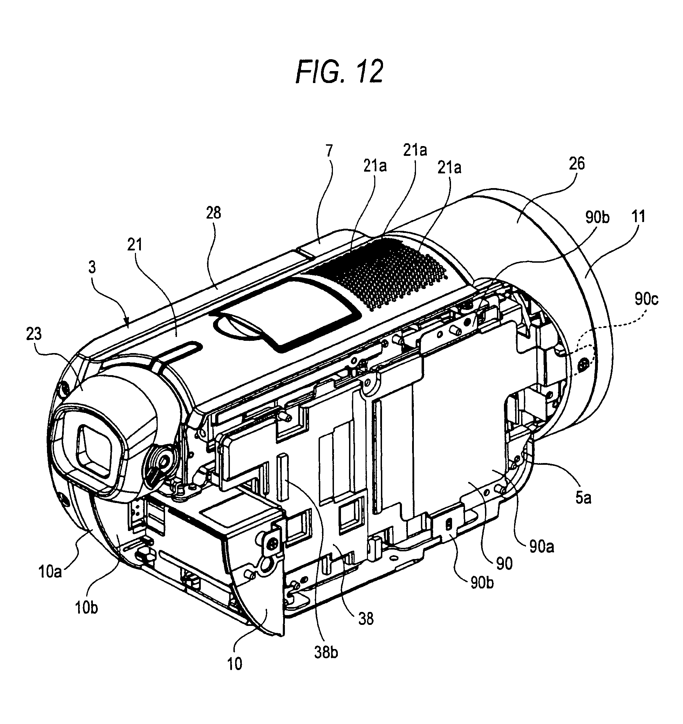

The control circuit board 38 is arranged on the right of the imaging block 77 (see Fig. 12).

A heat radiation plate 90 is attached to the control circuit board 38. The heat radiation plate 90 has a base surface section 90a, attached surface sections 90b provided at both the upper and the lower edges of the base surface section 90a, and a connecting surface section 90c projected forward from the base surface section 90a. The attached surface sections 90b of the heat radiation plate 90 are attached to the control circuit board 38. The connecting surface section 90c is connected to the decorative ring 26 by, for example, screwing.

A not-shown heat transfer sheet is arranged between the base surface section 90a of the heat radiation plate 90 and the electronic components 38a mounted on the control circuit board 38. Both the surfaces of the heat transfer sheet are set in surface contact with the electronic components 38a and the base surface section 90a of the heat radiation plate 90, respectively.

When the imaging apparatus 1 is driven, the electronic components 38a mounted on the control circuit board 38 generates heat. The heat generated in the electronic components 38a is transmitted from the heat transfer sheet to the connecting surface section 90c through the base surface section 90a of the heat radiation plate 90, transmitted from the connecting surface section 90c to the decorative ring 26, and discharged to the atmosphere.

In this way, in the imaging apparatus 1, the heat generated in the electronic components 38a is discharged from the decorative ring 26 and the heat generated in the imaging device 79 and the chip components 80a is discharged from the decorative panel 21. Since the imaging apparatus 1 has the two lines of heat transfer paths, it is possible to improve the heat radiation efficiency.

Since the decorative ring 26 is formed of aluminum, it is possible to reduce the weight of the imaging apparatus 1 and improve the heat radiation efficiency.

The directions of front and rear, up and down, and left and right are only for convenience of explanation. In the application of the invention, directions are not limited to these directions.

It is possible to apply the structures and the constitutions according to the embodiment of the invention to various electronic apparatuses.

The specific shapes and structures of the respective units described in the embodiment are only examples of embodiments in carrying out the invention. The technical scope of the invention should not be limitedly interpreted by the shapes and the structures.

It should be understood by those skilled in the art that various modifications, combinations, sub-combinations, and alterations may occur depending on design requirements and the other factors insofar as they are within the scope of the appended claims or the equivalents thereof.

## Claims

1. An imaging apparatus comprising:
an imaging-block arranging section in which an imaging block having predetermined lenses and an imaging device is arranged; and
a media housing section that houses a recording medium for recording a photographed image,
the imaging-block arranging section and the media housing section being formed in an outer housing of the imaging apparatus, wherein
a partition wall that partitions the imaging-block arranging section and the media housing section is provided.

2. An imaging apparatus according to claim 1, wherein
a control circuit board on which a driving circuit for driving the recording medium is formed is arranged in the imaging-block arranging section,
a through hole is formed in the partition wall,
a wiring board that connects the control circuit board and the recording medium via the through hole is provided, and
a cover member that closes the through hole, through which the wiring board is inserted, is provided.

3. An imaging apparatus according to claim 2, wherein the wiring board is pressed against an opening edge of the through hole and held by the cover member.

4. An imaging apparatus according to claim 1, wherein the recording medium is a hard disk.
